# FASCICULE DE BREVET EUROPEEN

(11) **EP 4 031 416 B1**
(45) Date de publication et mention de la délivrance du brevet: **31.07.2024**
(21) Numéro de dépôt: 20768014.1
(22) Date de dépôt: 04.09.2020
(51) Int. Cl.: B60R 13/02, B29C 45/14

(54) **PANNEAU D'HABILLAGE DE VEHICULE AUTOMOBILE EN MATERIAU POLYMERE EXPANSE**
KRAFTFAHRZEUGVERKLEIDUNGSTEIL AUS EXPANDIERTEM POLYMERMATERIAL
MOTOR VEHICLE TRIM PANEL MADE OF EXPANDED POLYMER MATERIAL

(30) Priorité: 20.09.2019 FR 1910364
(43) Date de publication de la demande: 27.07.2022
(73) Titulaire: Renault S.A.S., 92100 Boulogne-Billancourt (FR)
(72) Inventeur: CHABASSOL, Ludovic, 28210 COULOMBS (FR); JEAN-MARIE, Corre, 78770 THOIRY (FR)
(74) Mandataire: Renault Group
(86) Numéro de dépôt international: PCT/EP2020/074777
(87) Numéro de publication internationale: WO 2021/052781

(56) Documents cités:
- EP-A1- 2 298 606
- DE-A1- 102014 107 098
- US-B1- 6 475 576

## Description

L'invention a pour objet un panneau d'habillage de véhicule automobile en matériau polymère expansé, réalisé notamment par la technique du surmoulage.

Dans l'habitacle d'un véhicule automobile, un panneau d'habillage peut recouvrir une paroi latérale de caisse, on parle alors de panneau de porte, ou former la planche de bord. Ces panneaux sont souvent réalisés en matériau polymère injecté, tel que du polypropylène, à l'intérieur duquel est noyé un insert de renfort d'un seul tenant pour assurer la tenue mécanique du panneau, notamment lors d'un choc.

Afin d'alléger la masse de ces panneaux d'habillage et ainsi de réduire les émissions de C0₂ des véhicules thermiques ou d'augmenter l'autonomie des véhicules électriques, il a été envisagé de remplacer le matériau polymère injecté par un matériau polymère expansé. Le panneau est alors réalisé par surmoulage du matériau polymère expansé sur l'insert de renfort, ce dernier étant placé dans un moule. Toutefois, afin de garantir la conformité géométrique de la pièce finale après surmoulage, il s'avère nécessaire de découper l'insert en plusieurs tronçons. Ceci n'est toutefois pas souhaitable en raison des risques de rupture du panneau au niveau des zones de découpe séparant les tronçons d'insert en cas de choc.

Le document EP 2 298 606 A1 présente un exemple de panneau d'habillage de véhicule automobile en matériau polymère expansé.

Il existe donc un besoin pour réaliser un panneau d'habillage de véhicule automobile en matériau polymère expansé qui soit résistant.

L'invention a ainsi pour objet un panneau d'habillage de véhicule automobile en matériau polymère expansé caractérisé en ce qu'il comprend une pluralité d'inserts de renfort distincts recouverts de matériau polymère expansé et noyés dans celui-ci, notamment par surmoulage, et en qu'au moins un insert de renfort est relié à un insert de renfort adjacent par un élément de liaison mécanique appliqué sur une face externe du panneau d'habillage.

La présence d'au moins un élément de liaison mécanique externe au panneau d'habillage permet ici d'assurer la tenue mécanique du panneau, au moins au niveau d'un espace séparant les deux inserts de renfort reliés par cet élément de liaison, en particulier en cas de choc. La face externe choisie peut notamment être celle qui est invisible depuis l'intérieur de l'habitacle lorsque le panneau est monté à l'intérieur du véhicule, de sorte que l'aspect visuel de celui-ci n'est pas impacté.

Le nombre et la position du ou des éléments de liaison mécanique pourront être variables et choisis de manière à renforcer des zones préalablement identifiées comme fragiles et susceptibles de rupture en cas de choc.

Avantageusement, lorsque plusieurs éléments de liaison mécanique sont prévus, ils peuvent tous être fixés sur une même face externe du panneau d'habillage.

Par « matériau polymère expansé », on entend un matériau alvéolaire formé d'une phase polymère solide et d'une phase gazeuse dispersée. Ce type de matériau alvéolaire est aussi parfois appelé « mousse » (« foam » en anglais). Il s'agit notamment de matériaux rigides, à savoir qui ne se déforment pas sous l'effet de leur propre poids. De tels matériaux expansés présentent l'avantage d'être légers, ce qui permet d'alléger le poids du panneau d'habillage.

Le matériau polymère expansé utilisé peut être du polypropylène expansé ou du polystyrène expansé. Pour limiter la bruyance, il est toutefois préférable d'utiliser du polypropylène expansé. Avantageusement, on peut utiliser un polypropylène expansé de masse volumique de 30 à 90 g/L.

Avantageusement, chaque élément de liaison mécanique peut être fixé à un insert de renfort en au moins un point de fixation. Ceci suffit à assurer la tenue mécanique du panneau au niveau de l'espace séparant les inserts de renfort reliés.

Avantageusement, chaque insert de renfort à relier à un autre insert de renfort peut être pourvu d'au moins un élément de fixation dont une extrémité libre fait saillie de la surface externe, ou affleure la surface externe, les éléments de liaison mécanique étant fixés aux extrémités libres de ces éléments de fixation.

Chaque élément de fixation peut avantageusement être réalisé d'une pièce avec un insert de renfort, simplifiant ainsi la réalisation du panneau et la mise en place des éléments de liaison. Des éléments de fixation rapportés et fixés par toute technique appropriée à l'insert de renfort avant le surmoulage du matériau polymère expansé peuvent toutefois être envisagés.

Dans un mode de réalisation, chaque élément de fixation peut être une tige ou un fût dont l'extrémité libre fait saillie de, ou affleure, la surface externe du panneau d'habillage. Le fût peut notamment être un fût lisse ou taraudé.

Avantageusement, les éléments de liaison mécanique peuvent être fixés aux inserts de renfort, ou à des éléments de fixation solidaires de ceux-ci (tels que ceux précédemment décrits), par collage, vissage ou soudure.

Les éléments de liaison mécanique peuvent être en un matériau choisi parmi un matériau polymère, un métal et un alliage métallique, de préférence un matériau polymère (non expansé), par exemple de type polypropylène, acrylonitrile butadiène styrène (ABS) ou autre.

Les inserts de renfort peuvent également être en un matériau choisi parmi un matériau polymère, un métal et un alliage métallique, de préférence un matériau polymère (non expansé), par exemple de même type que le matériau polymère décrit ci-dessus. Les matériaux des inserts de renfort et des éléments de liaison mécanique peuvent notamment être les mêmes.

Le panneau d'habillage selon l'invention peut être un panneau de porte ou une planche de bord.

L'invention concerne également un véhicule automobile comprenant au moins un panneau d'habillage selon l'invention. Ledit au moins un panneau d'habillage peut être choisi parmi un panneau de porte et une planche de bord.

L'invention est maintenant décrite en référence aux dessins annexés, non limitatifs, dans lesquels :
[Fig. 1] la figure 1 représente une vue de face d'un panneau de porte réalisé par surmoulage selon un mode de réalisation de l'invention, avant mise en place des éléments de liaison mécanique,
[Fig. 2] la figure 2 représente la même vue que la figure 1, après mise en place des éléments de liaison mécanique,
[Fig. 3] la figure 3 représente une vue en coupe de la figure 2 selon la ligne A-A,
[Fig. 4] la figure 4 représente une vue de face d'une planche de bord selon un mode de réalisation de l'invention.

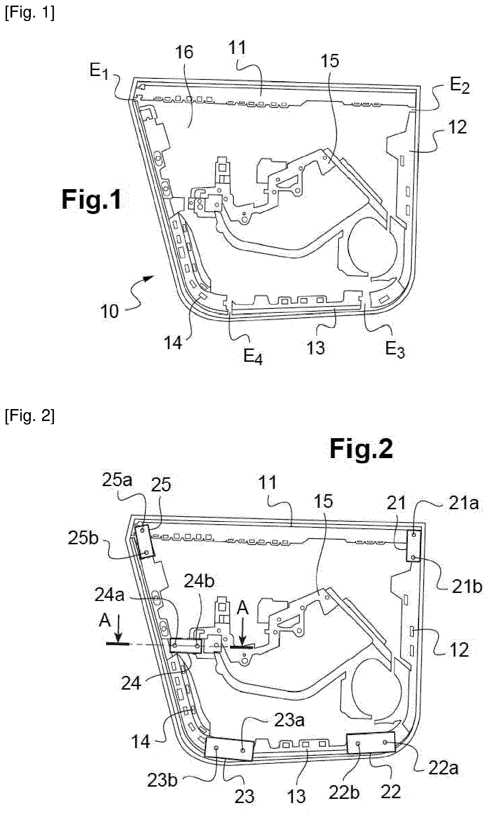

La figure 1 représente une vue de face d'un panneau d'habillage 10 en matériau polymère expansé, ici un panneau de porte 10. On distingue également une pluralité d'inserts de renfort distincts 11 à 15 sur lesquels est surmoulé le matériau polymère expansé 16. On remarque ainsi que ces inserts de renfort 11-15 sont séparés les uns des autres par des espaces libres E1 à E4. Ces espaces, séparant les inserts de renfort d'une distance par exemple de 2 à 10mm peuvent former des zones de fragilité, et donc de rupture, en cas de choc.

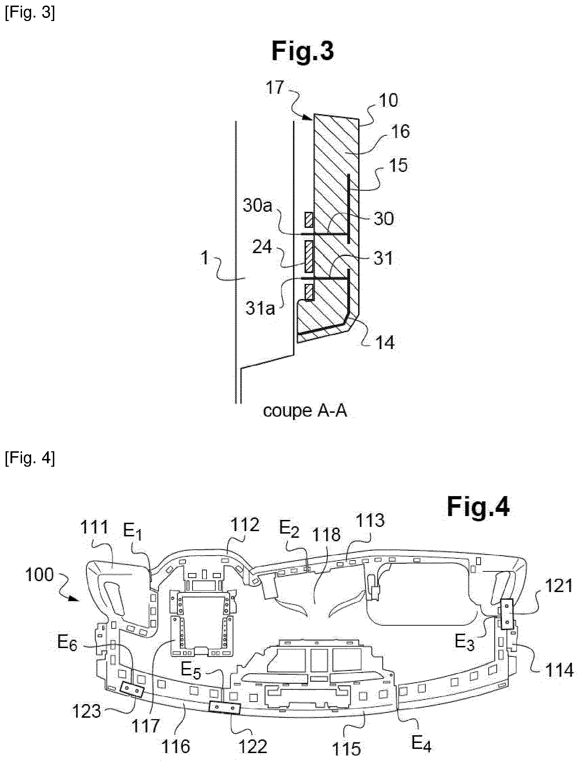

Selon l'invention, au moins un insert de renfort est relié à un insert de renfort adjacent par un élément de liaison mécanique appliqué sur une face externe 17 du panneau de porte 10. Cette face externe 17 est ici une face invisible depuis l'intérieur de l'habitacle lorsque le panneau d'habillage est monté à l'intérieur du véhicule. Il s'agit d'une face destinée à être appliquée contre une paroi latérale 1 de la structure de caisse du véhicule tel que représenté figure 3.

Dans l'exemple représenté, cinq éléments de liaison mécanique 20, 21, 22, 23, 24, 25 sont prévus respectivement entre les inserts de renfort 11 et 12, 12 et 13, 13 et 14, 14 et 15, 14 et 11.

Dans cet exemple, les éléments de liaison mécanique se présentent sous la forme de simples plaques rectangulaires appliquées sur la face externe 17 du panneau de porte 10. L'invention n'est bien entendu pas limitée par la forme d'un élément de liaison mécanique, pourvu que celui-ci puisse être appliqué contre la face externe 17 du panneau d'habillage. Ainsi, un élément de liaison mécanique dont la forme épouse une forme non plane de la face externe 17 du panneau d'habillage peut être envisagé. Par ailleurs, le dimensionnement de chaque élément de liaison mécanique pourra être déterminé en fonction de différents paramètres tels que la robustesse de la liaison souhaitée, l'environnement disponible, le poids de l'ensemble.

Chaque élément de liaison mécanique est fixé à un insert de renfort en un seul point de fixation dans l'exemple représenté. Sur la figure 2, les points de fixation sont référencés 21a, 21b ; 22a, 22b ; 23a, 23b ; 24a, 24b ; 25a, 25b. Toutefois, davantage de points de fixation par insert de renfort pourraient être prévus selon les besoins et/ ou la place disponible pour réaliser la fixation.

Chaque élément de liaison mécanique peut être fixé aux inserts de renfort qu'il relie par vissage, collage, soudure. Par exemple, une vis introduite depuis la face externe 17 du panneau d'habillage jusqu'à l'insert de renfort au travers du matériau polymère expansé peut assurer la fixation d'un élément de liaison mécanique à cet insert de renfort.

Il peut toutefois être difficile de repérer la position des inserts de renfort noyés à l'intérieur du matériau polymère expansé après le surmoulage de celui-ci. Dans ce cas, on peut prévoir d'équiper chaque insert de renfort à relier à un autre insert de renfort d'au moins un élément de fixation dont une extrémité libre fait saillie de la surface externe 17, ou affleure cette dernière.

Ainsi, dans l'exemple représenté, tel que visible plus particulièrement sur la figure 3, l'élément de liaison mécanique 24 est fixé à l'insert de renfort 15 par un élément de fixation 30 et à l'insert de renfort 14 par un élément de fixation 31. Ces éléments de fixation 30, 31 sont solidaires des inserts de renfort 14, 15. Ils sont ici chacun réalisés d'un seul tenant avec l'insert de renfort auquel ils sont solidarisés.

Chacun des éléments de fixation 30, 31 présente une extrémité libre 30a, 31a qui fait saillie de la face externe 17 du panneau d'habillage 10. Ces extrémités libres 30a, 31a sont solidarisées à l'élément de liaison mécanique 24, par exemple par vissage, collage, aux soudures.

A titre d'exemple, les éléments de fixation 30, 31 peuvent se présenter sous la forme de simples tiges, notamment des tiges pleines) dont l'extrémité peut être fixée à l'élément de liaison mécanique 24 soit par collage, soit par soudure lorsque les matériaux de l'élément de fixation et de l'élément de liaison mécanique le permettent (métaux ou alliages métalliques pouvant être fixés par soudure ou matériaux polymères pouvant être soudés par fusion à chaud). Ces tiges pourraient aussi être équipées d'un filetage externe pour la fixation d'un écrou.

En variante, ces éléments de fixation 30, 31 peuvent se présenter sous la forme de fûts lisses à l'intérieur desquels peuvent être insérées des vis auto taraudeuses. Dans ce cas, il n'est pas nécessaire que les extrémités libres 30a, 31b fassent saillie de la face externe 17, il suffit qu'elles affleurent cette surface pour être facilement repérées. Ces fûts pourraient également présenter un taraudage interne pour le vissage d'une simple vis.

Les éléments de fixation représentés s'étendent ici perpendiculairement à la surface externe 17. L'invention n'est toutefois pas limitée à cet agencement, pourvu qu'ils puissent être fixés à l'élément de liaison mécanique.

Bien entendu, l'invention n'est pas limitée à ces modes de fixation, pourvu que chaque élément de liaison mécanique puisse être fixé de manière robuste aux inserts de renfort qu'il doit relier.

On notera notamment que le matériau de l'élément de liaison mécanique peut être différent du matériau des inserts de renfort auquel il est fixé.

La figure 4 représente un panneau d'habillage 100 en matériau polymère expansé formant une planche de bord. Ce panneau d'habillage 100 est formé de sept inserts de renfort 111 à 117 séparés les uns des autres par des espaces E1 à E6 et sur lesquels est surmoulé le matériau polymère expansé 118. Trois éléments de liaison mécanique 121, 122, 123 sont ici prévus pour relier respectivement les inserts de renfort 113 et 114, 115 et 116, 116 et 111. La forme des éléments de liaison et leur fixation aux inserts de renfort peuvent être tel que décrit en référence au panneau de porte.

Le panneau d'habillage selon l'invention présente ainsi l'avantage d'être léger et robuste à la fois, même en cas de choc, et ce, malgré le surmoulage du matériau polymère expansé sur plusieurs inserts de renfort distincts.

## Revendications

1. Panneau d'habillage (10, 100) de véhicule automobile en matériau polymère expansé (16, 118) **caractérisé en ce qu'**il comprend une pluralité d'inserts de renfort distincts (11- 15, 111-117) recouverts de matériau polymère expansé et noyés dans celui-ci et en qu'au moins un insert de renfort est relié à un insert de renfort adjacent par un élément de liaison mécanique (21- 25, 121-123) appliqué sur une face externe (17) du panneau d'habillage.

2. Panneau d'habillage (10, 100) selon la revendication 1, **caractérisé en ce que** chaque élément de liaison mécanique (21- 25 ; 121-123) est fixé à un insert de renfort (11- 15, 111-117) en au moins un point de fixation.

3. Panneau d'habillage (10, 100) selon la revendication 1 ou 2, **caractérisé en ce que** chaque insert de renfort à relier à un autre insert de renfort est pourvu d'au moins un élément de fixation (30, 31) dont une extrémité libre (30a, 31a) fait saillie de la surface externe (17), ou affleure la surface externe (17), les éléments de liaison mécaniques étant fixés aux extrémités libres de ces éléments de fixation.

4. Panneau d'habillage (10, 100) selon la revendication 3, **caractérisé en ce que** chaque élément de fixation (30, 31) est réalisé d'une pièce avec l'insert de renfort.

5. Panneau d'habillage (10, 100) selon la revendication 3 ou 4, **caractérisé en ce que** chaque élément de fixation (30, 31) est une tige ou un fût dont l'extrémité libre fait saillie de, ou affleure, la surface externe (17) du panneau d'habillage.

6. Panneau d'habillage (10, 100) selon l'une quelconque des revendications 1 à 5, **caractérisé en ce que** les éléments de liaison mécanique (21- 25 ; 121-123) sont fixés aux inserts de renfort ou à des éléments de fixation solidaires de ceux-ci par collage, vissage ou soudure.

7. Panneau d'habillage (10, 100) selon l'une quelconque des revendications 1 à 6, **caractérisé en ce qu'**il comprend au moins une des caractéristiques suivantes :
- les éléments de liaison mécanique (21- 25 ; 121-123) sont en un matériau choisi parmi un matériau polymère, un métal et un alliage métallique,
- les inserts de renfort (11- 15, 111-117) sont en un matériau choisi parmi un matériau polymère, un métal et un alliage métallique.

8. Panneau d'habillage (10, 100) selon l'une quelconque des revendications 1 à 7, **caractérisé en ce que** le panneau est un panneau de porte ou une planche de bord.

9. Véhicule automobile caractérisé en qu'il comprend au moins un panneau d'habillage (10, 100) selon l'une quelconque des revendications 1 à 8.

10. Véhicule automobile selon la revendication 9, caractérisé en que ledit au moins un panneau d'habillage est choisi parmi un panneau de porte (10) et une planche de bord (100).

## Patentansprüche

1. Verkleidungsteil (10, 100) eines Kraftfahrzeugs aus expandiertem Polymermaterial (16, 118), **dadurch gekennzeichnet, dass** es eine Vielzahl von separaten Verstärkungseinsätzen (11-15, 111-117) beinhaltet, die von expandiertem Polymermaterial bedeckt und in diesem eingebettet sind, und dass mindestens ein Verstärkungseinsatz durch ein mechanisches Verbindungselement (21-25, 121-123), das an einer Außenseite (17) des Verkleidungsteils angebracht ist, mit einen benachbarten Verstärkungseinsatz verbunden ist.

2. Verkleidungsteil (10, 100) nach Anspruch 1, **dadurch gekennzeichnet, dass** jedes mechanische Verbindungselement (21-25; 121-123) an mindestens einem Befestigungspunkt an einem Verstärkungseinsatz (11-15, 111-117) befestigt ist.

3. Verkleidungsteil (10, 100) nach Anspruch 1 oder 2, **dadurch gekennzeichnet, dass** jeder mit einem anderen Verstärkungseinsatz zu verbindende Verstärkungseinsatz über mindestens ein Befestigungselement (30, 31) verfügt, von dem ein freies Ende (30a, 31a) von der Außenoberfläche (17) vorsteht oder mit der Außenoberfläche (17) bündig ist, wobei die mechanischen Verbindungselemente an den freien Enden dieser Befestigungselement befestigt sind.

4. Verkleidungsteil (10, 100) nach Anspruch 3, **dadurch gekennzeichnet, dass** jedes Befestigungselement (30, 31) mit dem Verstärkungseinsatz einstückig ausgebildet ist.

5. Verkleidungsteil (10, 100) nach Anspruch 3 oder 4, **dadurch gekennzeichnet, dass** jedes Befestigungselement (30, 31) ein Stab oder ein Schaft ist, dessen freies Ende von der Außenoberfläche (17) des Verkleidungsteils vorsteht oder mit dieser bündig ist.

6. Verkleidungsteil (10, 100) nach einem beliebigen der Ansprüche 1 bis 5, **dadurch gekennzeichnet, dass** die mechanischen Verbindungselemente (21-25; 121-123) an den Verstärkungseinsätzen oder an Befestigungselementen, die mit diesen durch Kleben, Schrauben oder Schweißen fest verbunden sind, befestigt sind.

7. Verkleidungsteil (10, 100) nach einem beliebigen der Ansprüche 1 bis 6, **dadurch gekennzeichnet, dass** es mindestens eine der folgenden Eigenschaften beinhaltet:
- die mechanischen Verbindungselemente (21-25; 121-123) sind aus einem Material, das au einem Polymermaterial, einem Metall und einer Metalllegierung ausgewählt ist,
- die Verstärkungseinsätze (11-15; 111-117) sind aus einem Material, das au einem Polymermaterial, einem Metall und einer Metalllegierung ausgewählt ist.

8. Verkleidungsteil (10, 100) nach einem beliebigen der Ansprüche 1 bis 7, **dadurch gekennzeichnet, dass** das Teil ein Türteil oder ein Armaturenbrett ist.

9. Kraftfahrzeug, **dadurch gekennzeichnet, dass** es mindestens ein Verkleidungsteil (10, 100) nach einem beliebigen der Ansprüche 1 bis 8 beinhaltet.

10. Kraftfahrzeug nach Anspruch 9, **dadurch gekennzeichnet, dass** das mindestens eine Verkleidungsteil aus einem Türteil (10) und einem Armaturenbrett (100) ausgewählt ist.

## Claims

1. Motor vehicle trim panel (10, 100) made of expanded polymer material (16, 118), **characterized in that** it comprises a plurality of distinct reinforcing inserts (11-15, 111-117) covered with expanded polymer material and embedded in the latter, and **in that** at least one reinforcing insert is connected to an adjacent reinforcing insert by a mechanical connection element (21-25, 121-123) applied to an outer face (17) of the trim panel.

2. Trim panel (10, 100) according to Claim 1, **characterized in that** each mechanical connection element (21-25; 121-123) is fastened to a reinforcing insert (11-15, 111-117) at at least one fastening point.

3. Trim panel (10, 100) according to Claim 1 or 2, **characterized in that** each reinforcing insert to be connected to another reinforcing insert is provided with at least one fastening element (30, 31), a free end (30a, 31a) of which projects from the outer surface (17), or is flush with the outer surface (17), the mechanical connection elements being fastened to the free ends of these fastening elements.

4. Trim panel (10, 100) according to Claim 3, **characterized in that** each fastening element (30, 31) is made in one piece with the reinforcing insert.

5. Trim panel (10, 100) according to Claim 3 or 4, **characterized in that** each fastening element (30, 31) is a rod or a shank whose free end projects from, or is flush with, the outer surface (17) of the trim panel.

6. Trim panel (10, 100) according to any one of Claims 1 to 5, **characterized in that** the mechanical connection elements (21-25; 121-123) are fastened to the reinforcing inserts, or to fastening elements secured to the latter, by adhesive bonding, screwing or welding.

7. Trim panel (10, 100) according to any one of Claims 1 to 6, **characterized in that** it comprises at least one of the following features:
- the mechanical connection elements (21-25; 121-123) are made of a material chosen from among a polymer material, a metal and a metal alloy,
- the reinforcing inserts (11-15, 111-117) are made of a material chosen from among a polymer material, a metal and a metal alloy.

8. Trim panel (10, 100) according to any one of Claims 1 to 7, **characterized in that** the panel is a door panel or a dashboard.

9. Motor vehicle, **characterized in that** it comprises at least one trim panel (10, 100) according to any one of Claims 1 to 8.

10. Motor vehicle according to Claim 9, **characterized in that** said at least one trim panel is chosen from among a door panel (10) and a dashboard (100).
